# EUROPÄISCHE PATENTSCHRIFT

(11) **EP 0 860 192 B1**
(45) Veröffentlichungstag und Bekanntmachung des Hinweises auf die Patenterteilung: **11.05.2005**
(21) Anmeldenummer: 98103097.6
(22) Anmeldetag: 21.02.1998
(51) Int. Cl.: B01D 46/12

(54) **Filteranlage**
Filtration device
Dispositif de filtration

(30) Priorität: 21.02.1997 DE 29703125 U
(43) Veröffentlichungstag der Anmeldung: 26.08.1998
(73) Patentinhaber: T.E.T. UMWELTTECHNIK GESELLSCHAFT FÜR LUFTTECHNISCHE VERFAHREN MBH (THERMAL AND ENVIRONMENTAL TECHNIQUES), 63505 Langenselbold (DE)
(72) Erfinder: Obermüller, Herbert, 63589 Linsengericht 4 (DE); Kethers, Ulrich, 63589 Linsengericht (DE); Wirl, Ernst, 61130 Nidderau-Windecken (DE)
(74) Vertreter: Stoffregen, Hans-Herbert, Dr. Dipl.-Phys.

(56) Entgegenhaltungen:
- DE-U- 9 203 474
- US-A- 4 523 931
- US-A- 4 560 396

## Beschreibung

Die Erfindung bezieht sich auf eine Filteranlage bestehend aus aneinander gereihten Filtergehäusen mit Seitenwandungen, Rückwandung, Kopfwandung und über einen Verschluss wie Tür verschließbarer Frontwandung, bodenseitigem Staubtrichter sowie einem gegebenenfalls von der Kopfwandung ausgehenden Aufsatz, wobei in dem jeweiligen Filtergehäuse mehrere von Staubtrichterseite her von Gas durchströmbare Arbeits- oder Hauptfilterzellen nebeneinander angeordnet sind und wobei vor oder in dem Aufsatz zumindest eine von einen von dem Hauptfilterzellen kommendem Gas durchströmbare Nachfilterzelle angeordnet ist.

Eine entsprechende Filteranlage ist dem DE 92 03 474 U1 zu entnehmen. Vorteil der entsprechenden Anlage ist es, dass diese modular ausgebildet ist, so dass Einzelanlagen zu Großanlagen zusammengestellt werden können. Dabei besteht auch die Möglichkeit, Anlagen zu erweitern, ohne dass ein großer lufttechnischer Aufwand erforderlich ist.

Entsprechende Filteranlagen für einen Durchsatz von zum Beispiel 30.000 m³ pro Stunde weisen ein umbautes Volumen von in etwa 75 m³ auf, wobei die erforderliche Nutzfläche, d.h. die Anlagenfläche einschließlich Servicefläche in etwa 23 m² beträgt. Pro Filtergehäuse sind grundsätzlich vier Hauptfilterzellen vorhanden. Diesen sind in Längsrichtung der Filteranlage aneinander gereihte Nachfilterzellen zugeordnet. Durch die Tiefe dieser Filterzellen wird die des als Abluftkanal ausgebildeten Aufsatzes vorgegeben, der zur Erreichung des erforderlichen Querschnitts entsprechend hoch ausgebildet ist.

Staubgasfilter bzw. mehrere Filtergehäuse umfassende Abscheidesysteme sind dem DE 77 02 702 U 1 bzw. der DE 26 04 494 A 1 zu entnehmen.

Der vorliegenden Erfindung liegt das Problem zugrunde, eine Filteranlage der zuvor beschriebenen Art so weiterzubilden, dass eine kompaktere Bauart ermöglicht wird, ohne dass ein größerer konstruktiver Aufwand erforderlich ist. Gleichzeitig soll erreicht werden, dass ein problemloser Transport einer Großanlage in einem Normcontainer möglich ist. Auch soll der erforderliche Platzbedarf im Vergleich zu bekannten Anlagen reduziert werden.

Das Problem wird erfindungsgemäß im Wesentlichen dadurch gelöst, dass in dem Filtergehäuse drei in einer senkrecht zur Längsrichtung der Filteranlage verlaufenden Reihe angeordnete Hauptfilterzellen oder insgesamt zumindest 6 Hauptfilterzellen in zwei nebeneinander liegenden senkrecht zur Längsrichtung der Filteranlage verlaufenden Reihen mit einer Breitenerstreckung derart angeordnet sind, dass die Gesamtbreite der Filteraulage dem eines containers einer Breite von 8 Fuß (ca. 2438 mm) angepasst ist, dass der unterhalb der Filterzelle verlaufende Staubtrichter zwei Sammeltrichterspitzen, zwischen denen eine Trennwand mit gegeneinander geneigten zur Sammeltrichteröffnung hin sich erstreckenden Staubleitflächen verlaufen, oder eine Sammeltrichterspitze aufweist, dass in Längsrichtung der Filteranlage in zwei Reihen nebeneinander angeordnete Nachfilterzellen angeordnet sind, über deren gesamte Tiefe oder nahezu gesamte Tiefe sich der wirksame Querschnitt des Aufsatzes erstreckt, und dass eine mit Druckluft arbeitende Abreinigungseinrichtung mit ihrem Abblaserohr jeweils den drei in der einen Reihe oder den sich den sechs Hauptfilterzellen in den zwei nebeneinander verlaufenden Reihen zugeordnet ist.

Die Filteranlage kann mit einer Breite von in etwa 2.200 mm ausgebildet sein.

Bei einer für einen Durchsatz von 30.000 m³/h ausgelegten Filteranlage weist diese vier aneinanderreihbare Filtergehäuse mit jeweils in zwei Reihen angeordneten Hauptfilterzellen auf, wobei sich zu den bekannten Filteranlagen eine Längenreduzierung von in etwa 33 % ergibt, ausgehend von den bekannten Anlagen gleichen Durchsatzes.

Dadurch, dass die Nachfilter in zwei Reihen oberhalb der Hauptfilterzellen angeordnet sind, ergibt sich der Vorteil, dass der durch den Aufsatz gebildete Reinluft- oder Abluftkanal in seiner Höhe reduziert werden kann, da die Grundfläche entsprechend der Tiefe der nebeneinanderliegenden Nachfilterzellen vergrößert ist. Demzufolge kann die erfindungsgemäße Filteranlage niedriger als die bekannten ausgebildet werden. Dies wird insbesondere auch durch die zwei Sammeltrichteröffnungen pro Staubtrichter bewirkt.

Als weiterer Vorteil ist die geringer benötigte Nutzfläche anzusehen. So zeichnet sich die Erfindung dadurch aus, dass die Filteranlage frontseitig entlang der Frontwand einen Servicebereich einer Fläche von x m² umfasst, der in etwa 40 % der Querschnittsfläche der Filteranlage entspricht. Somit ist die erforderliche Stellfläche der erfindungsgemäßen Filteranlage im Vergleich zu bekannten Anlagen geringer, so dass ein günstiger Kostennutzenertrag gegeben ist.

Die Filteranlage selbst weist eine Höhe h auf, die in etwa dem 1,35- bis 1,5-fachen der Breite b der Filteranlage, vorzugsweise in etwa 1,4-fachen der Breite b entspricht.

Dadurch, dass jedem Filtergehäuse, welches bevorzugterweise 2 x 3 Hauptfilterzellen umfasst, ein Staubfilter mit zwei Sammeltrichtern zugeordnet ist, diese zueinander beabstandet laufen und sich zwischen diesen eine Trennwand erstreckt, die im Schnitt aneinander grenzenden Schenkel eines Dreiecks entspricht, kann im Vergleich zu bekannten Filteranlagen die Gesamthöhe des Sammeltrichters reduziert werden, ohne dass die aus dem Gasstrom abgeschiedenen Partikel wie Staub Gefahr laufen, Brücken zu bilden, wodurch die Funktionsfähigkeit der Filteranlage beeinträchtigt werden könnte. Vielmehr ist durch die Zwischenwandung sichergestellt, dass die Wandungen des Sammeltrichters, die zu den Trichterspitzen führen, die notwendigen Neigungswinkel von in etwa 60° in Bezug auf die Vertikale aufweisen.

Des Weiteren ist vorgesehen, dass zwischen dem in Richtung der Filterzellen ragenden Scheitel der Trennwand und den Filterzellen vorhandene freie Fläche gleich oder größer als die Gaseintrittsfläche in den Staubtrichter ist, wodurch sichergestellt ist, dass durch die Trennwand kein zusätzlicher Widerstand für das durch die Filteranlage strömende Gas aufgebaut wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine Filteranlage in Vorderansicht,
- Fig. 2: die Filteranlage nach Fig. 1 in Draufsicht,
- Fig. 3: die Filteranlage gemäß Fig. 1 und 2 in Seitenansicht,

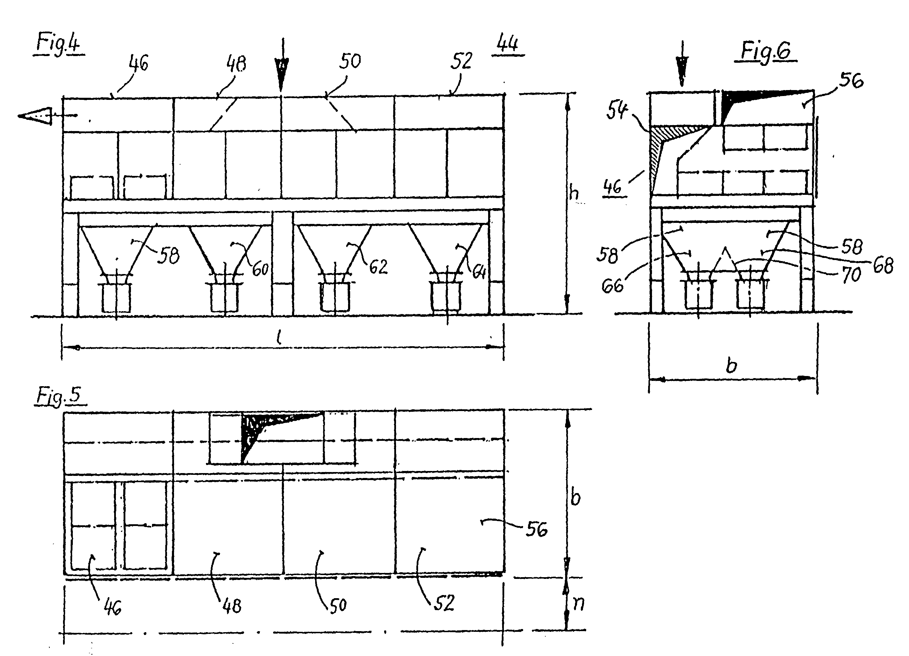

- Fig. 4: eine erfindungsgemäße Filteranlage in Vorderansicht,
- Fig. 5: die Filteranlage gemäß Fig. 4 in Draufsicht,
- Fig. 6: die Filteranlage nach den Fig. 4 und 5 in Seitenansicht,
- Fig. 7: eine Detaildarstellung der Filteranlage nach den Fig. 4 bis 6.
- Fig. 8: eine weitere Ausführungsform eines Staubtrichters und
- Fig. 9: eine Prinzipdarstellung einer weiteren Filteranlage im Querschnitt.

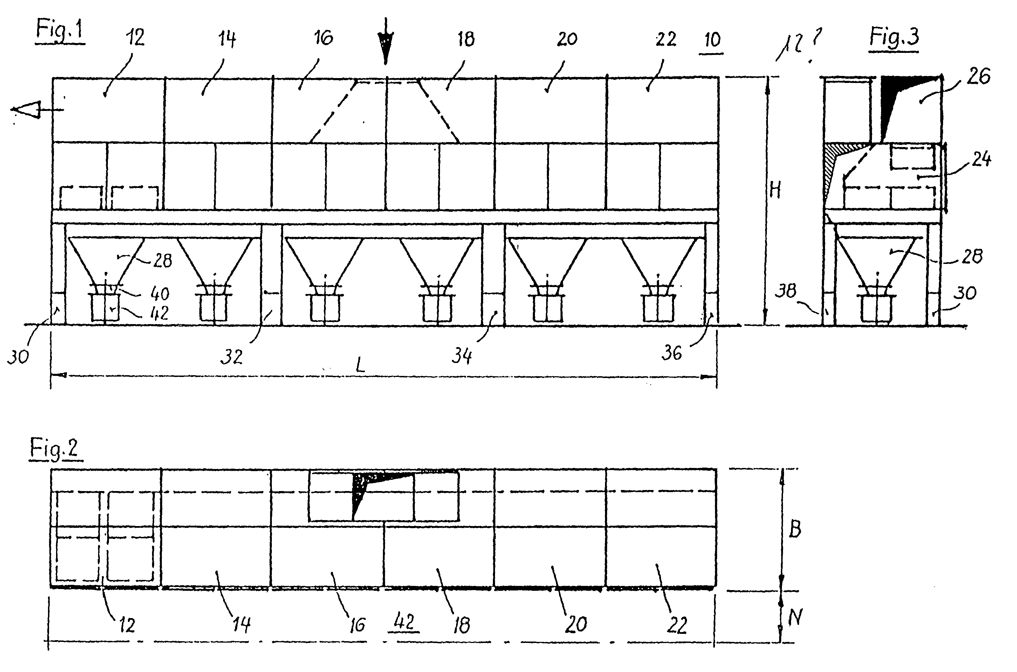

Um nach konventioneller Technik abzuscheidende Partikel enthaltendes Gas zu reinigen, sind Filteranlagen 10 entsprechend der Darstellung der Fig. 1 bis 3 bekannt. Diese bestehen aus modular aufgebauten und aneinander gereihten Filtergehäusen 12, 14, 16, 18, 20, 22, die jeweils eine Hauptkammer 24, einen Aufsatz 26 sowie einen Staubtrichter 28 umfassen. Die Filtergehäuse 12, 14, 16, 18, 20, 22 bzw. deren Hauptkammer 24 sind über Beine 30, 32, 34, 36, 38 abgestützt. Die Staubtrichter 28 weisen jeweils eine Trichterspitze 40 auf, unterhalb der ein Aufnahmebehältnis 42 für abgeschiedene Partikel wie Staub anordbar ist.

In der jeweiligen Hauptkammer 24 sind vier Hauptfalterzellen neben- und hintereinander angeordnet. Von der Frontseite sind die Kammern über nicht dargestellte Verschlüsse wie Türen zugänglich. Somit verläuft vor der Frontseite ein Nutzgang oder Serviceplatz 42.

Der Aufsatz 26 ist als Abströmkanal für gereinigtes Gas ausgebildet, wobei die Breite des Kanals bzw. die Bodenfläche in etwa die Tiefe einer Nachfilterzelle aufweist, die oberhalb der Hauptfilterzellen der Hauptkammern 26 angeordnet ist.

Die Hauptfilterzellen selbst sind über Düsenbalken abreinigbar. Insoweit wird jedoch auf eine hinlänglich bekannte Technik verwiesen, wie diese dem DE 92 03 474 U 1 zu entnehmen ist.

Eine Filteranlage 10, die den Fig. 1 bis 3 zu entnehmen ist, die für einen Gasdurchsatz von z.B. 30.000 m³/h ausgelegt ist, umfasst 6 Filtergehäuse 12, 14, 16, 18, 20, 22 mit jeweils vier Hauptfilterzellen und jeweils zwei Nachfilterzellen und weist eine Länge L von 9.000 mm, eine Höhe H von 3.300 mm und eine Breite B von 1.500 mm auf. Die Nutzfläche vergrößert sich uni den Gang entlang der Frontseite, also um die Breite N von 1.000 mm. Hieraus ergibt sich ein Platzbedarf von 22,5 m² bei einem umbauten Volumen von 74,25 m³.

Erfindungsgemäß wird eine Filteranlage 44 vorgeschlagen, die aus vier Filtergehäusen 46, 48, 50, 52 besteht, wobei jedes Gehäuse eine Hauptkammer 54, einen als Abluftkanal ausgebildeten Aufsatz 56 sowie pro Gehäuse einen Staubtrichter 58, 60, 62, 64 mit jeweils zwei Trichterspitzen 66, 68 umfasst, die in einer Ebene pro Filtergehäuse 46, 48, 50, 52 verlaufen, die sich vorzugsweise senkrecht zur Längsrichtung der Filteranlage 44 erstreckt. Die Filtergehäuse 46, 48, 50, 52 sind in gewohnter Weise aufgeständert.

Abweichend vom vorbekannten Stand der Technik befinden sich in jedem Filtergehäuse 46, 48, 50, 52 jeweils 6 Hauptfilterzellen, und zwar jeweils drei in einer Reihe hintereinander angeordnete Filterzellen. Jeweils in einer Reihe angeordneten drei Hauptfilterzellen sind unterhalb des Aufsatzes 56 zwei Nachfilterzellen zugeordnet. Hierdurch bedingt wird die Grundfläche des Aufsatzes 56 vergrößert. Bei gleicher Gasdurchsatzleistung zu bekannten Filteranlagen 10 ist demzufolge der Aufsatz 56 entsprechend zu reduzieren.

Unter Berücksichtigung der zuvor wiedergegebenen Anzahl von Haupt- und Nachfilterzellen pro Filtergehäuse 46, 48, 50, 52 und der Reduzierung des Aufsatzes 56 einerseits und der Ausbildung der Staubtrichter 68, 62, 64 mit den jeweils zwei Trichterspitzen 66, 68 andererseits ergibt sich eine Volumen- bzw. Flächenreduzierung wie folgt.

So beläuft sich die Höhe h auf 3.050 mm, die Länge l auf 6.000 mm, die Breite b auf 2.200 mm bei unveränderbaren Servicegangbreite n entlang der Frontseite der Filteranlage 44 mit einer Breite von 1.000 mm. Hieraus ergibt sich eine Nutzfläche 19,2 m² bei einem umbauten Volumen von 58,56 m². Die Platz- und Volumenreduzierung im Vergleich zu konventionellen Filteranlagen gemäß der Fig. 1 bis 3 sind demzufolge offensichtlich.

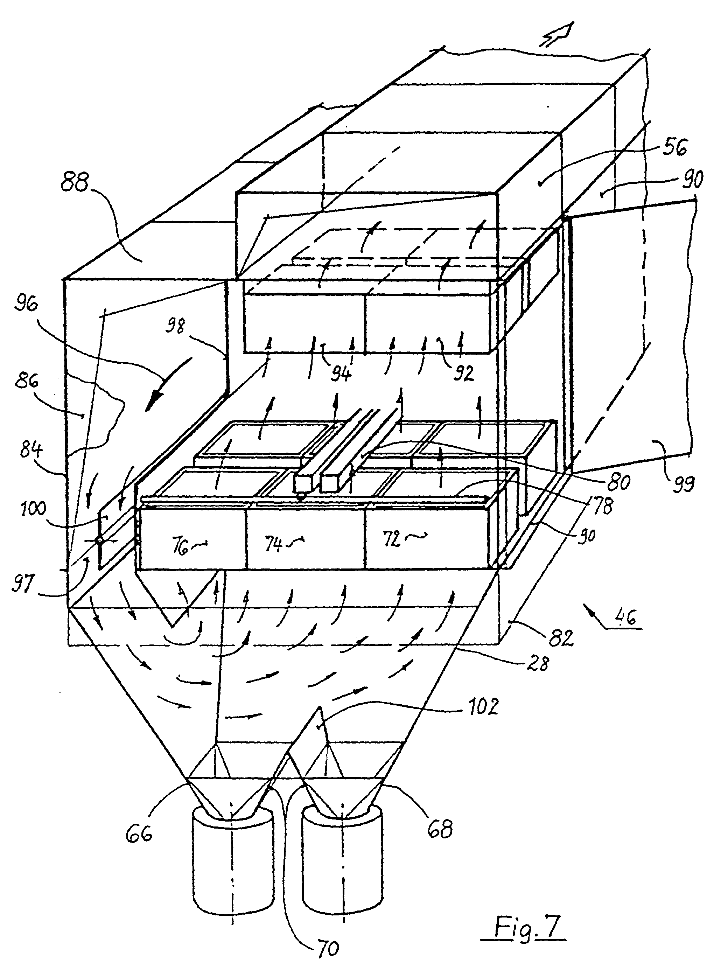

Die Höhenreduzierung, die u.a. durch die Staubtrichter 58, 60, 62, 64 erzielt wird, wird erfindungsgemäß dadurch ermöglicht, dass sich zwischen den Trichterspitzen 66, 68 des jeweiligen Staubtrichters 68, 62, 64 eine Trennwand 70 erstreckt, die - entsprechend der Darstellung Fig. 6 - im Schnitt eine Dreiecksform ausweist. Hierdurch bedingt verlaufen die Begrenzungswandungen zur Trichterspitze 66, 68 unter einem Winkel von in etwa 60° zur Vertikalen, so dass eine Brückenbildung von abgeschiedenem Staub oder sonstigen Partikeln ausgeschlossen ist.

Durch die kompakte Ausbildung der Filteranlage 44 ergibt sich eine Breite b, die es ermöglicht, eine entsprechende Filteranlage 44 in einem Normcontainer einer Breite von 8 Fuß zu transportieren, ohne dass besondere aufwendige Verankerungsmaßnahmen in Breitenrichtung erforderlich sind.

Wie anhand der Fig. 7 verdeutlicht, ist jeweils drei in einer Reihe angeordneten Hauptfilterzellen 72, 74, 76 ein einziger Düsenbalken 78 mit stationärem Gaszuführungsbalken 80 zügeordnet, um die Hauptfilterzellen 72, 74, 76 abzureinigen (Bewegungsrichtung in Längsrichtung der Anlage). Jedes Filtergehäuse 46 umfasst einen Grundrahmen 82, von denen eine Rückwandung 84, eine Seitenwandung 86 sowie eine Kopfwandung 88 ausgeht, von der der Aufsatz 56 ausgeht. Die Frontwandung 90 ist in bekannter Weise mit einer Tür 99 verschließbar, um die Hauptfilterzellen 72, 74, 76 bzw. die über diese angeordneten Nachfilterzellen 92, 94 entfernen bzw. einbringen zu können.

Rückwandgehäuseseitig strömt Gas über einen Eintrittskanal 96 und einen das zu reinigende Gas zwischen der Rückwand 84 und einer inneren Wandung 98, die Filterzellenbereiche gegenüber der Gaseintrittsöffnung verschließen, führenden Kanal 97, dessen Querschnitt über eine Drossel wie Klappe 100 regulierbar ist. Über den Kanal 97 gelangt das Gas in den von den Staubtrichtern 28 umgebenen Raum, um von unten durch die Hauptfilterzellen 72, 74, 76 und sodann über die Nachfilterzellen 92, 94 zu strömen. Sodann gelangt das gereinigte Gas über den von dem Aufsatz 56 umgebenen Abluftkanal. Insoweit wird jedoch auch auf bekannte Techniken verwiesen, wie diese rein beispielhaft aus dem DE 92 03 474 U1 zu entnehmen ist.

Anhand der Fig. 7 erkennt man des Weiteren, dass die Trennwand 70 zwischen den Trichterspitzen 66, 68 zur Unterseite der Hauptfilterzellen 72, 74, 76 von seinem Scheitel 102 aus betrachtet derart beabstandet ist, dass sich eine Querschnittsfläche ergibt, die kleiner als die Querschnittsfläche des Gaseintrittskanals 97 ist. Hierdurch bedingt kann die Trennwand 70 keinen unerwünschten Strömungswiderstand für das die Filteranlage 44 durchströmende Gas bilden.

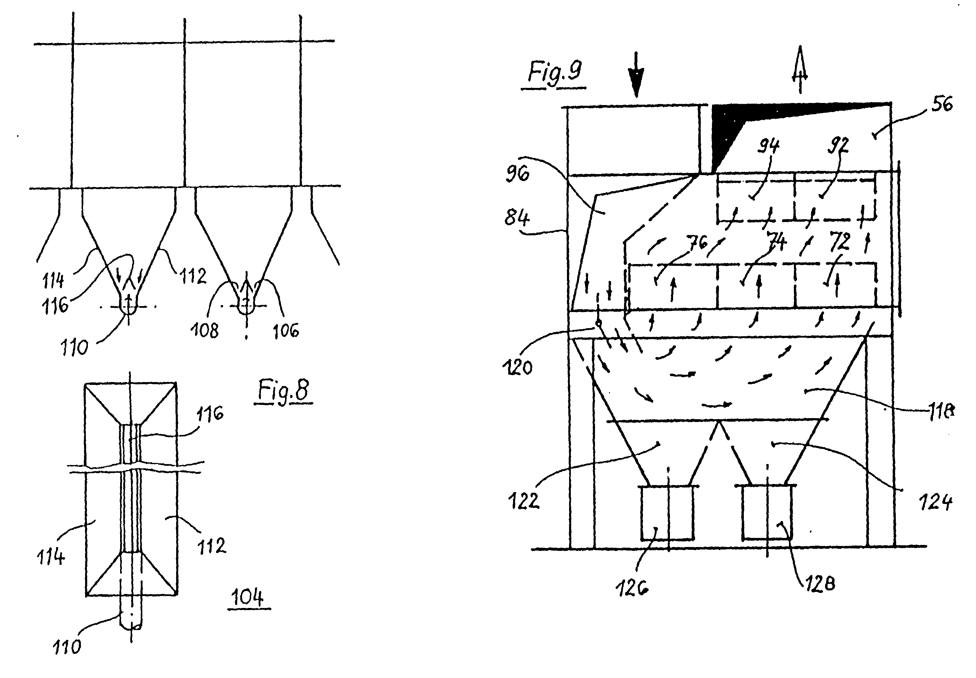

In der Fig. 8 ist eine weitere Ausführungsform eines Staubtrichters 104 dargestellt, über dessen als Längsschlitze 106, 108 ausgebildete Öffnungen Staub über ein Rohr 110 abgesaugt wird. Die Schlitze 106 und 108 werden dabei durch zwischen Seitenwandungen 112 und 114 des Staubtrichters 104 und einem in das Innere des Staubtrichters 104 weisenden dachförmigen Abweisers 116 gebildet. Die Schlitze 106 und 108 münden dann in die zu dem Längsrohr 110 führenden Absaugrohr. Gegebenenfalls können die Schlitzbreiten variiert werden.

Durch diese Konstruktion kann eine weitere Reduzierung der Höhe des Staubtrichters 104 und damit der Gesamthöhe einer erfindungsgemäß ausgebildeten Filteranlage erreicht werden.

Durch die Darstellung der Fig. 9 soll verdeutlicht werden, dass ein Staubtrichter 118 in ein Abgasleitgehäuse 120 und bodenseitig von diesem ausgehende Trichter 122, 124 mit bodenseitigen Auffangtonnen 126 und 128 unterteilt sein kann. Das Abgasleitgehäuse stellt sicher, dass ein zusätzlicher Strömungswiderstand für das eine erfindungsgemäße Filteranlage durchströmende und zu reinigende Abgas nicht aufgebaut wird.

Durch erfindungsgemäß ausgebildete kompakte Filteranlagen ergibt sich im Vergleich zu den bekannten Filteranlagen der Vorteil, dass die Anzahl der Funktionselemente insbesondere in Form von Roh- und/oder Reingasklappen. Steuerelementen, Messstellen und Abreinigungsantrieben erheblich reduziert werden kann. Insbesondere in Bezug auf die Abreinigungseinrichtung, die im Ausführungsbeispiel zwei parallel und über insgesamt 6 Haupt- oder Arbeitsfilterzellen 72, 74, 76 verfahrbare Düsenbalken 78 besteht, ergibt sich eine konstruktive und damit kostengünstige Vereinfachung, die Parallelen zu dem vorbekannten Stand der Technik nicht zeigen.

## Patentansprüche

1. Filteranlage (44) bestehend aus aneinander gereihten Filtergehäusen (46, 48, 50, 52) mit Seitenwandunge (86), Rückwandung (84), Kopfwandung (88) und über einen Verschluss wie Tür (99) verschließbarer Frontwandung (90), bodenseitigem Staubtrichter (58, 60, 62, 64, 104) sowie einem gegebenenfalls von der Kopfwandung ausgehenden Aufsatz (56), wobei in dem jeweiligen Filtergehäuse mehrere von Staubtrichterseite her von Gas durchströmbare Hauptfilterzellen (72, 74, 76) nebeneinander angeordnet sind und wobei vor oder in dem Aufsatz zumindest eine von einen von dem Hauptfilterzellen kommendem Gas durchströmbare Nachfilterzelle (92, 94) angeordnet ist,
**dadurch gekennzeichnet,**
**dass** in jedem Filtergehäuse (46, 48, 50, 52) drei in einer senkrecht zur Längsrichtung der Filteranlage verlaufenden Reihe angeordnete Hauptfilterzellen oder insgesamt zumindest 6 Hauptfilterzellen (72, 74, 76) in zwei nebeneinander liegenden Reihen senkrecht zur Längsrichtung der Filteranlage (44) verlaufenden Reihen mit einer Breiteuerstreckung derart angeordnet sind dass die Gesamtbreite der Filteranlage der eines containers einer Breite von ca. 2438 mm (8 Fuß) angepasst ist, dass der unterhalb der Hauptfilterzellen verlaufende Staubtrichter (58, 60, 62, 64) zwei Sammeltrichterspitzen (66, 68), zwischen denen gegeneinander geneigte zum Sammeltrichter hin sich erstreckende Trennwände (70, 102) verlaufen, oder eine Sammeltrichterspitze (104) aufweist, dass unterhalb des Aufsatzes (56) in Längsrichtung der Filteranlage in zwei Reihen nebeneinander angeordnete Nachfilterzellen (92, 94) angeordnet sind, über deren gesamte Tiefe der wirksame Querschnitt des als Abgaskanal ausgebildeten Aufsatzes (56) sich erstreckt, und dass eine Abreinigungseinrichtung (78) jeweils den drei in der einen Reihe oder den in den zwei nebeneinander verlaufenden Reihen vorhandenen Hauptfilterzellen zugeordnet ist.

2. Filteranlage nach Anspruch 1,
**dadurch gekennzeichnet,**
**dass** die Gesamtbreite der Filteranlage in etwa 2.200 mm beträgt und/oder dass die für einen Gasdurchsatz von 30.000 m³/h ausgelegte Filter-anlage (44) vier aneinander reihbare Filtergehäuse (46, 48, 50, 52) mit jeweils zumindest drei Hauptfilterzellen umfasst und/oder dass die Filteranlage eine Gesamthöhe von in etwa 3.050 mm, gegebenenfalls bis zu 3.500 mm aufweist.

3. Filteranlage nach einem oder mehreren der vorhergehenden Ansprüche,
**dadurch gekennzeichnet,**
**dass** die Filteranlage (44) einen entlang der Frontwandung (90) verlaufenden Servicebereich von x m² umfasst, der in etwa 40 % bis 50 % der Querschnittsfläche der Filteranlage entspricht und/oder dass die Filteranlage eine Gesamthöhe h aufweist, die in etwa dem 1,35- bis 1,6-fachen, vorzugsweise dem 1,4-fachen der Breite b der Filteranlage entspricht.

4. Filteranlage nach einem oder mehreren der vorhergehenden Ansprüche,
**dadurch gekennzeichnet,**
**dass** die Sammeltrichter (66, 68) eines jeden Staubtrichters (58, 60, 62, 64) in einer vorzugsweise senkrecht zur Längsrichtung der Filteranlage (44) verlaufenden Ebene angeordnet sind und dass zwischen in Richtung der Filterzellen (72, 74, 76) ragendem Scheitel (102) der Trennwand (70) und den Filterzellen vorhandene Fläche gleich oder größer als die Gaseintrittsfläche in dem Staubtrichter (58, 60, 62, 64) ist.

5. Filteranlage nach einem oder mehreren der vorhergehenden Ansprüche,
**dadurch gekennzeichnet,**
**dass** der Staubtrichter (104) zwei in Längsrichtung verlaufende gegebenenfalls breitenmäßig verstellbare Längsschlitze (106, 108) aufweist, die in einem zu einer Absaugvorrichtung führenden Kanal münden, wobei die Längsschlitze durch Seitenwandungen (112, 114) des Staubtrichters und zu diesem beabstandet in das Innere des Staubtrichters ragenden Abweiser (116) begrenzt sind, der vorzugsweise dachförmig ausgebildet ist und dessen Scheitel den Filterzellen (72, 74, 76) zugewandt ist.

6. Filteranlage nach einem oder mehreren der vorhergehenden Ansprüche,
**dadurch gekennzeichnet,**
**dass** der Staubtrichter (118) aus einem filterseitigen Abgasleitgehäuse (120) und bodenseitig von diesem ausgehende Trichter (122, 124) besteht, wobei vorzugsweise das Abgasleitgehäuse (120) mit den Trichtern (122, 124) eine Einheit bildet und/oder in einen zwei Sammeltrichterspitzen (122, 124) aufweisenden Sammeltrichter übergeht.

7. Filteranlage nach zumindest Anspruch 1,
**dadurch gekennzeichnet,**
**dass** der Staubtrichter (104) zwei quer zur Längsrichtung verlaufende Längsschlitze (106, 108) aufweist, die in einem zu einer Absaugvorrichtung führenden Kanal münden und dass die Längsschlitze durch Seitenwandungen (112, 114) des Staubtrichters und zu diesen beabstandet in das Innere des Staubtrichters ragenden dachförmigen Abweiser (116) gebildet sind.

8. Filteranlage nach einem oder mehreren der vorhergehenden Ansprüche,
**dadurch gekennzeichnet,**
**dass** die Abreinigungseinrichtung einen senkrecht zur Reihenlängsrichtung verfahrbaren Düsenbalken (78) umfasst.

## Claims

1. Filter system (44) comprising filter housings (46, 48, 50, 52) arranged in a row with side panel (86), rear panel (84), top panel (88) and front panel (90) lockable by means of a closure such as a door (99), dust funnel (58, 60, 62, 64, 104) on the bottom and attachment (56) extending from the top panel if necessary, where in the respective filter housing several main filter cells (72, 74, 76) through which gas can flow from the dust funnel side are arranged adjacently and where at least one after-filter cell (92, 94) through which gas coming from the main filter cells can flow is arranged in front of or inside said attachment,
**wherein**
three main filter cells arranged in a row perpendicular to the longitudinal direction of the filter system or a total of at least six main filter cells (72, 74, 76) in two adjacent rows perpendicular to the longitudinal direction of the filter system (44) are arranged in each filter housing (46, 48, 50, 52) and extend over a width such that the overall width of the filter system is adjusted to that of a container with a width of around 2,438 mm (8 feet), wherein the dust funnel (58, 60, 62, 64) underneath the main filter cells has two collector funnel tips (66, 68), between which are partition panels (70, 102) inclined against one another and extending towards the dust funnel, or a collector funnel tip (104), wherein after-filter cells (92, 94) arranged in two adjacent rows are arranged underneath the attachment (56) in the longitudinal direction of the filter system, the effective cross-section of the attachment (56) being designed as an exhaust duct extending over the entire width of said after-filter cells, and wherein a cleaning unit (78) is assigned to each of the three main filter cells arranged in one row or to the main filter cells provided in two adjacent rows.

2. Filter system according to Claim 1,
**wherein**
the overall width of the filter system is about 2,200 mm, and/or wherein the filter system (44) rated for a gas throughput of 30,000 m³/h comprises four filter housings (46, 48, 50, 52) arrangeable in a row each with at least three main filter cells, and/or wherein the filter system has an overall height of about 3,050 mm, if necessary up to 3,500 mm.

3. Filter system according to one or more of the previous claims,
**wherein**
the filter system (44) comprises a service area of x m² along the front panel and corresponding to around 40% to 50% of the cross-sectional area of the filter system and/or wherein the filter system has an overall height h corresponding to about 1.35 to 1.6 times, preferably 1.4 times, the width b of the filter system.

4. Filter system according to one or more of the previous claims,
**wherein**
the collector funnels (66, 68) of each dust funnel (58, 60, 62, 64) are arranged in a plane running preferably perpendicular to the longitudinal direction of the filter system (44), and wherein the surface between the apex (102) of the partition panel (70) projecting in the direction of the filter cells (72, 74, 76) and the filter cells is equal to or larger than the gas entry area in the dust funnel (58, 60, 62, 64).

5. Filter system according to one or more of the previous claims,
**wherein**
the dust funnel (104) has two longitudinal slots (106, 108) in the longitudinal direction and if necessary width-adjustable which open into a duct leading to an extraction device, these longitudinal slots being limited by side panels (112, 114) of the dust funnel and a baffle (116) at a distance from said dust funnel and projecting into its interior, which is preferably designed roof-shaped with its apex facing the filter cells (72, 74, 76).

6. Filter system according to one or more of the previous claims,
**wherein**
the dust funnel (118) comprises a filter-side exhaust guide housing (120) and funnels (122, 124) extending from the bottom thereof, the exhaust guide housing (120) and the funnels (122, 124) preferably forming a unit and/or merging into a collector funnel having two collector funnel tips (122, 124).

7. Filter system according to at least Claim 1,
**wherein**
the dust funnel (104) has two longitudinal slots (106, 108) transverse to the longitudinal direction and opening into a duct leading to an extraction device and
wherein the longitudinal slots are formed by side panels (112, 114) of the dust funnel and by roof-shaped baffles (116) at a distance therefrom and projecting into the interior of the dust funnel.

8. Filter system according to one or more of the previous claims,
**wherein**
the cleaning device comprises a nozzle bar movable perpendicular to the longitudinal direction of the rows.

## Revendications

1. Installation de filtrage (44) constituée de corps de filtrage (46, 48, 50, 52) alignés, avec parois latérales (86), paroi arrière (84), paroi supérieure (88) et une paroi avant (90) pouvant être fermée par un dispositif de fermeture tel qu'une porte (99), d' une trémie à poussière (58, 60, 62, 64, 104) dans sa partie inférieure ainsi que d' un haut (56) prolongeant le cas échéant la paroi supérieure, sachant que dans chaque corps de filtrage sont disposés l'un à côté de l'autre plusieurs cellules filtres principales (72, 74, 76) pouvant être traversées par du gaz à partir du côté de la trémie à poussière, et qu'avant ou dans le haut est placée au moins une cellule filtre aval (92, 94) pouvant être traversée par du gaz provenant d'une des cellules filtres principales,
**caractérisée en ce**
**que** dans chaque corps de filtrage (46, 48, 50, 52) sont disposés dans une rangée perpendiculaire au sens longitudinal de l'installation de filtrage trois cellules filtres principales ou au total au moins 6 cellules filtres principales (72, 74, 76) dans deux rangées placées côte à côte et perpendiculaires au sens longitudinal de l'installation de filtrage (44), et s'étendant en largeur de telle manière que la largeur totale de l'installation de filtrage est adaptée à celle d'un conteneur d'une largeur d'environ 2438 mm (8 pieds), en ce que la trémie à poussière (58, 60, 62, 64) s'étendant au-dessous des cellules filtres principales présente deux pointes de trémie collectrice (66, 68), entre lesquelles s'étendent deux parois (70, 102) inclinées en sens opposés en direction de la trémie collectrice, ou une pointe de trémie collectrice (104), en ce qu'au-dessous du haut (56) sont disposées des cellules filtres aval (92, 94) dans deux rangées placées côte à côte et perpendiculaires au sens longitudinal, sur la profondeur totale desquelles s'étend la section transversale utile du haut (56) formé comme canal de gaz d'échappement, et en ce qu'un dispositif de dépoussiérage (78) est affecté à chacune des trois cellules filtres principales disposées dans une rangée ou de celles disposées dans les deux rangées placées côte à côte.

2. Installation de filtrage selon la revendication 1,
**caractérisée en ce**
**que** la largeur totale de l'installation de filtrage s'élève à environ 2200 mm et/ou que l'installation de filtrage (44) dimensionnée pour un débit de gaz de 30 000 m³/h comprend quatre corps de filtrage (46, 48, 50, 52) avec au moins trois cellules filtres principales et pouvant être alignés, et/ou en ce que l'installation de filtrage présente une hauteur hors tout d'environ 3050 mm, pouvant atteindre 3500 mm le cas échéant.

3. Installation de filtrage selon une ou plusieurs des revendications précédentes,
**caractérisée en ce**
**que** l'installation de filtrage (44) comprend une zone d'entretien de x m² s'étendant le long de la paroi avant (90) et qui correspond approximativement à 40 à 50 % de la surface de la section transversale de l'installation de filtrage, et/ou que l'installation de filtrage présente une hauteur hors tout h dont la valeur se situe approximativement entre 1,35 à 1,6 fois, de préférence à 1,4 fois la largeur b de l'installation de filtrage.

4. Installation de filtrage selon une ou plusieurs des revendications précédentes,
**caractérisée en ce**
**que** les trémies collectrices (66, 68) de chaque trémie à poussière (58, 60, 62, 64) sont placées de préférence dans un plan perpendiculaire au sens longitudinal de l'installation de filtrage (44), et que la surface entre l'arête (102) de la cloison (70) faisant saillie en direction des cellules filtres (72, 74, 76) et les cellules filtres est supérieure ou égale à la surface d'entrée du gaz dans la trémie à poussière (58, 60, 62, 64).

5. Installation de filtrage selon une ou plusieurs des revendications précédentes,
**caractérisée en ce**
**que** la trémie à poussière (104) présente deux fentes oblongues (106, 108) s'étendant dans le sens longitudinal et réglables en largeur le cas échéant, qui débouchent dans un canal menant à un dispositif d'aspiration, sachant que les fentes oblongues sont limitées par des parois latérales (112, 114) de la trémie à poussière et par un déflecteur (116) qui fait saillie à l'intérieur de la trémie à poussière à une certaine distance de celle-ci et a de préférence la forme d'un toit dont l'arête est orientée vers les cellules filtres (72, 74, 76).

6. Installation de filtrage selon une ou plusieurs des revendications précédentes,
**caractérisée en ce**
**que** la trémie à poussière (118) est constituée d'un carter collecteur de gaz d'échappement (120) du côté des filtres, prolongé par une trémie (122,124) du côté du sol, sachant que de préférence, le carter collecteur de gaz d'échappement (120) forme une unité avec la trémie (122, 124) et/ou se prolonge en une trémie collectrice présentant deux pointes de trémie collectrice (122, 124).

7. Installation de filtrage selon au moins la revendication 1,
**caractérisée en ce**
**que** la trémie à poussière (104) présente deux fentes oblongues (106, 108) transversales par rapport au sens longitudinal qui débouchent dans un canal menant à un dispositif d'aspiration, et que les fentes oblongues sont formées par des parois latérales (112, 114) de la trémie à poussière et par un déflecteur (116) en forme de toit qui fait saillie à l'intérieur de la trémie à poussière à une certaine distance de celle-ci.

8. Installation de filtrage selon une ou plusieurs des revendications précédentes,
**caractérisée en ce**
le dispositif de dépoussiérage comprend une rampe de buses (78) mobile et perpendiculaire au sens longitudinal des rangées.
